Europäisches Patentamt

(19) European Patent Office

Office européen des brevets

(11) Veröffentlichungsnummer: **0 340 208**
A1

## (12) EUROPÄISCHE PATENTANMELDUNG

(21) Anmeldenummer: 89890115.2

(22) Anmeldetag: 20.04.89

(51) Int. Cl.4: **C 08 J 5/14**
F 16 D 69/04

(30) Priorität: 20.04.88 AT 1014/88

(43) Veröffentlichungstag der Anmeldung:
02.11.89  Patentblatt  89/44

(84) Benannte Vertragsstaaten:
BE DE ES FR GB IT

(71) Anmelder: **ING. JOHANN LEINWEBER Anstalt für
Mechanik**
**Industriegelände Nord Johann-Giefing-Strasse 8-10**
**A-2700 Wiener Neustadt  (AT)**

**CHEMISCHE WERKE FRANZ V. FURTENBACH
GESELLSCHAFT M.B.H.**
**Franz v. Furtenbach-Strasse 1**
**A-2700 Wr. Neustadt  (AT)**

(72) Erfinder: **Farnleitner, Armin**
**Pognergasse 12**
**A-2700 Wr. Neustadt  (AT)**

(74) Vertreter: **Müllner, Erwin, Dr. et al**
**Patentanwälte Dr. Erwin Müllner Dipl.-Ing. Werner
Katschinka Postfach 159 Weihburggasse 9**
**A-1010 Wien  (AT)**

(54) **Verfahren zur Herstellung eines Bremsbelages.**

(57)  Auf eine unbeschichtete Trägerplatte (4) wird unmittelbar vor dem Pressen trockener, lösungsmittelfreier, pulverförmiger Klebstoff, z. B. gemahlener Novolak mit 8 - 9 % Hexamethylentetramin, elektrostatisch aufgebracht. Danach wird die Trägerplatte (4) auf eine Preßform aufgelegt, die mit Reibbelagpulver und gegebenenfalls Zwischenbelagpulver beschickt worden ist, und der Bremsbelag gepreßt. Das Aufbringen des Klebstoffs kann dadurch erfolgen, daß die Trägerplatte (4) auf eine obere Abdeckung (1) einer Beschichtungskammer gelegt wird. Die Abdeckung (1) hat eine Öffnung (2), die den zu beschichtenden Bereich der Trägerplatte (4) definiert. Durch eine Zufuhrleitung (14) wird Klebstoff mittels Druckluft an einer Zentralelektrode (6) vorbei eingeblasen und verwirbelt, sodaß er sich auf der Trägerplatte (4) niederschlägt.

Fig. 1

EP 0 340 208 A1

## Beschreibung

### Verfahren zur Herstellung eines Bremsbelages

Die Erfindung betrifft ein Verfahren zur Herstellung eines Bremsbelages.

Zur Herstellung von Bremsbelägen werden nach dem Stand der Technik u. a. Anlagen verwendet, die als Rundtischmaschinen ausgebildet sind. Eine gewisse Anzahl von Heißpressen (meist 6, 12, 18 oder 24) sind am Umfang des Rundtisches befestigt. Der Rundtisch wird taktweise weitergedreht, sodaß die Heißpressen an ortfsesten Manipulationsstationen vorbeigeführt werden. Bei der ersten Manipulationsstation werden die fertigen Beläge aus den Heißpressen entnommen; anschließend kann die Heißpresse gereinigt und dann mit Trennmittel besprüht werden. Bei der zweiten Manipulationsstation werden die Formen mit der Reibbelagmasse befüllt und anschließend wird die Trägerplatte aufgelegt. Danach schließt die Heißpresse, und der Härteprozeß beginnt. Während des Härteprozesses läuft die Heißpresse einmal im Kreis und gelangt dann wieder zur ersten Manipulationsstation, wo der fertige Bremsbelag entnommen wird und ein neuer Zyklus beginnt.

Die Anzahl der Heißpressen am Rundtisch richtet sich im wesentlichen nach der Aushärtezeit, je größer diese ist, desto mehr Heißpressen sollten vorgesehen sein. Sonst müßte die Taktzeit verlängert werden, was zu einer unvollständigen Auslastung der Manipulationsstationen führt.

Es ist anderseits auch möglich, die Pressen in einer Reihe oder in zwei nebeneinanderliegenden Reihen ortsfest anzuordnen. In diesem Fall werden die Pressen durch eine eigene Transportvorrichtung beschickt, die die Reibbelagpulver und die Trägerplatte von einer ortsfesten Beschickungsanlage zu den Pressen bringt.

Bei einer Rundtischmaschine und bei einer Linearanordnung wird also immer nur eine Presse nach der anderen beschickt. Jede Presse kann ein, unter Umständen aber auch mehrere Formnester aufweisen, die dann zugleich beschickt werden.

Damit die Trägerplatte mit dem Reibbelag (oder mit einem eventuell verwendeten Zwischenbelag) eine feste Verbindung eingeht, wird ein Klebstoff verwendet. Gemäß dem Stand der Technik sind die Trägerplatten, die bei der zweiten Manipulationsstation in einem Magazin gestapelt sind, bereits mit einem Klebefilm beschichtet. Der Kleber wird in der Heißpresse aktiv und härtet aus.

In der Praxis zeigt sich, daß die beschichteten Trägerplatten manchmal untereinander verkleben und dann nicht mehr automatisch aus dem Magazin entnommen werden können. Dies führt jedesmal zu einer Maschinenstörung.

Es ist Aufgabe der vorliegenden Erfindung, dieses Problem zu beseitigen.

Diese Aufgabe wird durch ein Verfahren zur Herstellung eines Bremsbelages erfindungsgemäß dadurch gelöst, daß man auf eine Trägerplatte trockenen, lösungsmittelfreien, pulverförmigen Klebstoff elektrostatisch aufbringt und die so beschichtete Trägerplatte auf eine Preßform einer Presse auflegt, die, wie bekannt, mit Reibbelagpulver und gegebenenfalls Zwischenbelagpulver beschickt worden ist, wonach der Premsbelag, wie bekannt, in der Presse gepreßt wird.

Erfindungsgemäß wird also die Trägerplatte erst knapp vor dem Pressen mit Klebstoff versehen, sodaß das Stapeln der Trägerplatten im Magazin keine Probleme verursachen kann, weil die Trägerplatten zu dieser Zeit noch nicht mit Klebstoff versehen sind.

Der Klebstoff wird allerdings nicht wie bisher üblich aufgetragen: bisher wurden lösungsmittelhältige Klebstoffe durch Besprühen oder auch Tauchen auf die Trägerplatten aufgetragen, um einen Klebfilm zu schaffen, der für eine längere Lagerung ausreichend stabil ist. Diese Art der Aufbringung kann nicht unmittelbar vor dem Pressen durchgeführt werden, weil Lösungsmittelreste beim Pressen sehr stören. Außerdem ist die Verwendung von Lösungsmitteln, deren Dämpfe im allgemeinen mit Luft explosionsfähige Gemische bilden, in der Nähe von Heißpressen sehr problematisch.

Erfindungsgemäß wird trockener, pulverförmiger Klebstoff elektrostatisch aufgebracht. Die elektrostatische Ladung bleibt etwa 20 Minuten bestehen; während dieser Zeit muß die Trägerplatte in die Presse befördert werden. In der Praxis ist die Zeit, die erforderlich ist, um die Trägerplatte zur Presse zu bringen, ganz wesentlich geringer, sodaß durch die begrenzte Haltbarkeit der Beschichtung keinerlei Probleme bestehen.

Die erfindungsgemäß beschichteten Trägerplatten können jedoch nicht - wie es bisher üblich war - längere Zeit in einem Magazin gestapelt werden. Die Erfindung besteht daher in der Kombination zweier Merkmale: einerseits wird die Trägerplatte zu einem anderen Zeitpunkt und anderseits auf andere Weise mit Klebstoff beschichtet.

Das erfindungsgemäße Aufbringen des Klebstoffs bringt neben der Lösung der oben erwähnten Aufgabe noch folgende Vorteile mit sich: durch die Verwendung eines lösungsmittelfreien Klebstoffs können alle Vorkehrungen in bezug auf Explosionsschutz entfallen; der Raum muß nicht ständig belüftet werden, um MAK-Werte des Lösungsmittels einzuhalten; die Wiedergewinnung bzw. Entsorgung des Lösungsmittels (bis zu einigen Tonnen pro Jahr) entfällt; die Trockenstraße für die Trägerplatten entfällt; die elektrostatische Aufbringung erfordert nur wenig Platz und kann daher gut in die Preßanlage integriert werden.

Die Erfindung läßt sich besonders gut bei den oben erwähnten Rundtischmaschinen oder Linearanordnungen durchführen, wo die Pressen Einzeloder auch Mehrfachformen haben, da dort immer nur eine Trägerplatte nach der anderen verwendet wird (bzw. nur jeweils einige wenige zugleich verwendet werden). Bei Pressen mit Vielfachformen, wo sehr viele Bremsbeläge gleichzeitig gepreßt werden, ist zusätzliche Sorgfalt notwendig, damit beim Beschicken der Presse mit allen notwendigen Trägerplatten die Klebstoffschicht nicht beschädigt wird.

Es ist zweckmäßig, daß die Trägerplatte unmittelbar vor dem Aufbringen des Klebstoffs beispielsweise durch Lösungsmittel in einer Tauchstation und/oder durch Sandstrahlen gereinigt wird. In diesem Fall können die Trägerplatten nach dem Stanzvorgang wo sie fett sind, im Magazin gestapelt werden.

Zum Aufbringen des Klebstoffs auf die Trägerplatte verfährt man vorzugsweise so, daß die Trägerplatte auf eine obere Abdeckung einer Beschichtungskammer gelegt wird, wobei in der oberen Abdeckung eine Öffnung vorgesehen ist, die den zu beschichtenden Bereich der Trägerplatte definiert, wonach Klebstoff in die Beschichtungskammer und an einer geladenen Elektrode vorbei geblasen wird. Da die Beschichtungskammer, wenn eine Trägerplatte aufgelegt ist, vollständig geschlossen ist, entfällt jede Staubentwicklung. Durch Vorgabe des Drucks der Druckluft, mit der der Klebstoff eingeblasen wird, und der Zeitdauer kann eine sehr gleichmäßige, gut reproduzierbare Schichtdicke erzielt werden. Die Beschichtung erfolgt exakt nur auf dem vorgesehenen Bereich der Trägerplatte.

Es ist vorteilhaft, wenn als Klebstoff gemahlener Novolak mit Hexamethylentetramin oder einem anderen Härtungsmittel eingesetzt wird. Dieser Klebstoff läßt sich sehr leicht elektrostatisch laden, sodaß er sich sehr gut zur Anwendung bei diesem Verfahren eignet.

Ein weiterer Vorteil ist seine hohe Klebekraft. Bei Scherversuchen, die mit erfindungsgemäß produzierten Bremsbelägen durchgeführt wurden, kam es bei fast allen heute üblichen Bremsbelagmaterialien immer zu einem Kohäsionsbruch, d. h. der Bremsklotz bricht in sich und nicht als ganzes von der Trägerplatte. Der Klebstoff hat also ausreichende Klebekraft.

Schließlich kann auch seine hellgelbe Farbe für die Qualitätssicherung sinnvoll ausgenützt werden: da die Trägerplatte zumeist wesentlich dünkler ist, ist auf einen Blick erkennbar, ob eine Trägerplatte vollständig beschichtet ist oder nicht. Dies kann auch automatisch erfolgen, indem die Trägerplatte bestrahlt wird und die Helligkeit des reflektierten Lichts gemessen wird.

Im folgenden wird das erfindungsgemäße Verfahren beispielsweise erläutert, wobei auf die Zeichnung bezug genommen wird.

Fig. 1 zeigt die Beschichtungskammer mit Trägerplatte im Schnitt,

Fig. 2 die Beschichtungskammer ohne Trägerplatte von oben.

Eine Trägerplatte wird von einem Manipulator aus einem Magazin entnommen. Wenn die magazinierten Trägerplatten noch nicht gereinigt worden sind, werden sie zu einer Reinigungsstation gebracht, wo sie in einem Tauchbad und in einer Sandstrahlanlage gereinigt werden. Es ist für die folgenden Schritte wichtig, daß die Trägerplatte sauber, vor allem fettfrei ist.

Danach wird die Trägerplatte 4 auf die obere Abdeckung 1 der Beschichtungskammer gelegt und gegebenenfalls angedrückt. In der Abdeckung befindet sich eine Öffnung 2, deren Form genau der Form des aufzupressenden Bremsklotzes gleicht. Die Öffnung wird durch die Trägerplatte 4 dicht verschlossen. Die Beschichtungskammer, deren Seitenwand 3 sich nach oben erweitert, weist unten eine Zufuhrleitung 14 auf, durch die mittels Druckluft pulverförmiger Klebstoff eingeblasen werden kann. Die Zufuhrleitung 14 endet in einem Rohr 5, in dessen Mitte sich eine Zentralelektrode 6 (Sprühelektrode) befindet. Diese Zentralekeltrode 6 wird auf 40-70 kV aufgeladen. Nun wird für ca. 2 Sekunden pulverförmiger Klebstoff eingeblasen. Im Vorbeiströmen an der Zentralelektrode 6 wird er aufgeladen. Durch die Druckluft wird er verwirbelt und schlägt sich auf der Trägerplatte 4 genau im Bereich der Öffnung 2 nieder. Die Öffnung 2 bestimmt also äußerst genau die Fläche der Trägerplatte 4, die mit Klebstoff beschichtet wird. Ihre Form ist natürlioh so gewählt, daß sie genau der Form des aufzupressenden Bremsklotzes entspricht.

Die Druckluft entweichtsamt überschüssigem Klebstoff durch beschlauchte Entlüftungen7, 8, die sich im unteren Bereich der Beschichtungskammer befinden. Der überschüssige Klebstoff wird wiederverwendet, sodaß das Auftragen abfall- und verlustfrei erfolgt.

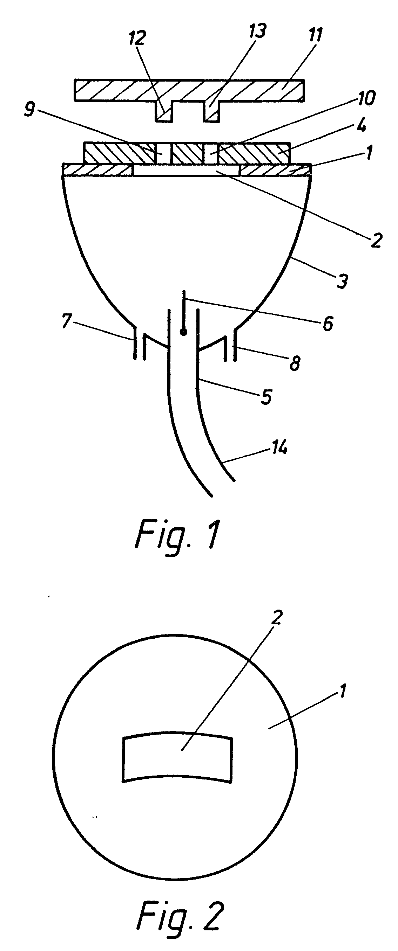

Bei manchen Bremsbelagtypen weisen die Trägerplatten Löcher 9, 10 auf. Beim fertigen Bremsbelag füllt der Bremsklotz diese Löcher aus, sodaß der Bremsklotz gegen Abscheren auch formschlüssig gesichert ist. Diese Löcher müssen während des Einblasens von Klebstoff natürlich verschlossen werden, damit der Klebstoff nicht entweichen kann. Dies kann z. B. durch eine Abdeckplatte 11 erfolgen, die in Fig. 1 zur Erhöhung der Deutlichkeit mit Abstand von der Trägerplatte 4 dargestellt ist. Falls ein Beschichten der Wände der Löcher 9, 10 nicht erwünscht ist, können Stopfen 12, 13 vorgesehen sein.Durch diese Stopfen 12, 13 wird die Trägerplatte 4 auch exakt positioniert.

Nachdem die gewünschte Fläche der Trägerplatte mit Klebstoff beschichtet worden ist, wird diese zu einer Heißpresse gebracht. Diese Heißpresse ist (z. B. während des Klebstoffauftrags) auf bekannte Weise mit Reibbelagpulver und Zwischenbelagpulver beschichkt worden. Die Trägerplatte wird auf die Preßform aufgelegt, und das Pressen kann beginnen. Während des Pressens wird das Pulver verdichtet und bildet einen Bremsklotz. Gleichzeitig wird der Klebstoff infolge der Hitze aktiv, sodaß der Bremsklotz mit der Trägerplatte verklebt. ·

**Patentansprüche**

1. Verfahren zur Herstellung eines Bremsbelages, dadurch gekennzeichnet, daß man auf eine Trägerplatte (4) trockenen, lösungsmittelfreien, pulverförmigen Klebstoff elektrostatisch aufbringt und die so beschichtete Trägerplatte (4) auf eine Preßform einer Presse auflegt, die, wie bekannt, mit Reibbelagpulver und gegebenenfalls Zwischenbelagpulver beschickt worden ist, wonach der Bremsbelag, wie bekannt, in der Presse gepreßt wird.

2. Verfahren nach Anspruch 1, dadurch ·

gekennzeichnet, daß die Trägerplatte (4) unmittelbar vor dem Aufbringen des Klebstoffs beispielsweise durch Lösungsmittel in einer Tauchstation und/oder durch Sandstrahlen gereinigt wird.

3. Verfahren nach Anspruch 1, dadurch gekennzeichnet, daß die Trägerplatte (4) zum Aufbringen des Klebstoffs auf eine obere Abdeckung (1) einer Beschichtungskammer gelegt wird, wobei in der oberen Abdeckung (1) eine Öffnung (2) vorgesehen ist, die den zu beschichtenden Bereich der Trägerplatte (4) definiert, wonach Klebstoff in die Beschichtungskammer und an einer geladenen Elektrode (6) vorbei geblasen wird.

4. Verfahren nach einem der Ansprüche 1 bis 3, dadurch gekennzeichnet, daß als Klebstoff gemahlener Novolak mit Hexamethylentetramin oder einem anderen Härtungsmittel eingesetzt wird.

**Fig. 1**

**Fig. 2**

Europäisches Patentamt

**EUROPÄISCHER RECHERCHENBERICHT**

Nummer der Anmeldung

EP 89890115.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - B - 2 025 826 (SCHLERETH) * Spalte 3, Zeile 61 - Spalte 4, Zeile 33 * -- | 1,2 | C 08 J 5/14 F 16 D 69/04 |
| A | AT - B - 314 919 (SEMPERIT AKTIENGESELLSCHAFT) * Seite 2, Zeilen 41-45 * -- | 1 | |
| | DE - A1 - 3 617 846 (TEXTAR GMBH) -- | | |
| A | GB - A - 1 426 122 (KUBLBECK) ---- | | |

RECHERCHIERTE SACHGEBIETE (Int. Cl.4)

C 08 J
F 16 D

Der vorliegende Recherchenbericht wurde für alle Patentansprüche erstellt.

| Recherchenort | Abschlußdatum der Recherche | Prüfer |
|---|---|---|
| WIEN | 06-07-1989 | WEIGERSTORFER |